# EUROPÄISCHE PATENTSCHRIFT

(11) **EP 0 733 854 B1**
(45) Veröffentlichungstag und Bekanntmachung des Hinweises auf die Patenterteilung: **14.06.2000**
(21) Anmeldenummer: 95104113.6
(22) Anmeldetag: 21.03.1995
(51) Int. Cl.: F23G 5/00, F23L 1/02, F23L 7/00, F23H 9/02

(54) **Verfahren und Walzenrost zum Verbrennen von Müll**
Method and roller grate for burning waste
Procédé et grille à rouleaux pour l'incinération de déchets

(43) Veröffentlichungstag der Anmeldung: 25.09.1996
(73) Patentinhaber: DEUTSCHE BABCOCK ANLAGEN GMBH, 46049 Oberhausen (DE); AIR PRODUCTS GMBH, D-45527 Hattingen (DE)
(72) Erfinder: Keldenich, Kai, Dr., D-45134 Essen (DE); Scheffler, Jürgen, D-46147 Oberhausen (DE); Grell, Peter, D-46147 Oberhausen (DE); Frielingsdorf, Othmar, D-65719 Hofheim am Taunus (DE); Robson, Colin Peter, New Malden, Surrey KT3 4SB (GB)
(74) Vertreter: Radünz, Ingo, Dipl.-Ing.

(56) Entgegenhaltungen:
- DE-A- 3 941 750
- DE-C- 600 546
- US-A- 5 044 288
- PATENT ABSTRACTS OF JAPAN vol. 6 no. 50 (M-120) ,3.April 1982 & JP-A-56 165818 (MITSUBISHI HEAVY IND LTD) 19.Dezember 1980,
- DATABASE WPI Section PQ, Week 9339 Derwent Publications Ltd., London, GB; Class Q73, AN 93-310092 & SU-A-1 756 741 ( POLZUNOV POWER EQUIP RES PRODN ASSOC) , 23.August 1992

## Beschreibung

Die Erfindung betrifft ein Verfahren zum Verbrennen von Müll auf einem Walzenrost mit den Merkmalen des Oberbegriffes des Anspruches 1. Außerdem betrifft die Erfindung einen Walzenrost gemäß dem Oberbegriff des Anspruchs 9.

In der SU 1 756 741 A1 wird ein Walzenrost beschrieben, bei den jedes Zwischenstück aus einem System von feststehenden Roststäben aufgebaut ist, zwischen denen sich Luftspalte befinden. Unter den Zwischenstücken sind Luftkästen angebracht, denen von einem zusätzlichen, vom Primärluftsystem unabhängigen Ventilator Luft zugeführt wird. Dadurch soll insbesondere der Ausbrand verbessert werden.

Soweit bekannt, hat dieser Vorschlag bisher bei Müllverbrennungsanlagen keinen Eingang in die Praxis gefunden. insbesondere ist bei den bis heute gebauten und in Betrieb befindlichen Walzenrostfeuerungen eine zusätzliche Luftzufuhr in den Walzenzwickeln nicht vorgesehen. Die gesamte dem Brennstoffbett zugeführte Primärluft wird durch die Mantelflächen der Rostwalzen zugeführt.

Im Bereich der Zwickel ist die Brennstoffschicht wesentlich dicker als in den Bereichen, in denen sie auf den Walzen aufliegt. Außerdem hat das Brennstoffmaterial die Tendenz, sich in den Zwickelbereichen, in denen sich das Feingut anreichert, zu verdichten. Dadurch ist der Sauerstoffbedarf in diesen Bereichen besonders hoch. Andererseits wird aber durch den erhöhten strömungswiderstand des anfliegenden Mülls der Primärluftstrom aus den Zwickeln in die Bereiche abgedrängt, in denen die Brennstoffschicht dünn und locker ist, also z. B. in die Randzonen des Rostes.

Zur Verbesserung das Ausbrandes bei der Müllverbrennung wird gemäß US-PS 3 403 643 bei einer Wanderrostfeuerung die gesamte Verbrennungsluft auf einen Sauerstoffgehalt von 25 bis 50 % angereichert. Es erscheint aber zweifelhaft, ob eine derartige Anreicherung in der Praxis durchführbar ist. Denn eine Erhöhung des Sauerstoffgehaltes von nur wenigen Prozent führt bereits zu einer Temperaturerhöhung, die die materialbedingten Grenzen überschreitet. Außerdem würde eine Sauerstoffanreicherung in der angegebenen Höhe den Betrieb in einem kaum noch tragbaren Maße verteuern.

Die EP 0 496 325 B1, beschreibt am Beispiel einer Walzenrostfeuerung mit nachgeschaltetem Dampferzeuger ein Verfahren, bei dem die Verbrennungstemperatur und die Dampfmenge im wesentlichen konstant gehalten werden sollen. Bei diesem Verfahren wird der Mülldurchsatz in Abhängigkeit von der gemessenen Dampfmenge eingestellt. In die Feuerung wird in Abhängigkeit von der Verbrennungstemperatur eine Löschflüssigkeit eingesprüht, bestehend aus Wasser, Abwasser oder Schlamm. Primärluft und Sekundärluft werden in Abhängigkeit von der Durchflußrate der Löschflüssigkeit mit Sauerstoff angereichert. Aus einem Beispiel geht hervor, daß sich bei einer Anreicherung auf etwa 50 % ein gewaltiger sauerstoffverbrauch ergibt: bei einem Mülldurchsatz von 800 t.d⁻¹ liegt der Sauerstoffverbrauch bei etwa 600 t.d⁻¹ Selbst für eine relativ geringe Anreicherung auf weniger als 24 % ergibt sich bei einem Mülldurchsatz von knapp 500 t.d⁻¹ ein Sauerstoffbedarf von über 100 t.d⁻¹

Aus der DE-A-3 941 750 ist eine Rostfeuerung bekannt, die aus zwei feststehenden Roststufen und einem Ausbrandrost besteht. Die zweite Roststufe ist als Düsenrost ausgebildet, über den ein als Schieber wirkender Zuteiler geführt ist. In der Stirnseite dieses Schiebers oder Zuteilers sind Düsenreihen mit Düsen angeordnet, durch die zusätzliche Luft eingeblasen wird. Diese Luft dient dazu, daß das zu verbrennende Material in einem sehr frühen Stadium verbrannt oder daß das Material in Richtung auf den Hauptfeuerraum verteilt wird. Die Düsen des Düsenrostes und die Düsen in der Stirnseite des Zuteilers können von einer gemeinsamen Luftversorgung beaufschlagt werden. Die Luft kann auch mit Sauerstoff angereichert werden.

Der Erfindung liegt die Aufgabe zugrunde, ein Verfahren zum Verbrennen von Müll anzugeben, bei dem mit geringen zusätzlichen Kosten ein deutlich verbesserter Ausbrand erreicht wird, ohne daß die Temperatur die materialbedingten Grenzen überschreitet. Darin eingeschlossen ist die Aufgabe, einen Walzenrost gemäß dem Oberbegriff des Anspruchs 9 weiterzuentwickeln, so daß er zur Durchführung des Verfahrens besonders geeignet ist.

Der erste Teil der Aufgabe wird durch das Verfahren gemäß Anspruch 1 gelöst, der zweite Teil durch die kennzeichnenden Merkmale des Anspruchs 9.

Bei diesem Verfahren wird nur die Zusatzluft, deren Menge im Verhältnis zur Primärluft gering ist, mit Sauerstoff angereichert. Sie vergrößert im Bereich der schmalen Zonen das Sauerstoffangebot und bewirkt eine Auflockerung der Müllschicht, so daß der Kontakt zwischen Brennstoffpartikeln und Sauerstoff verbessert wird. Das auf diese Weise in den schmalen Zonen angefachte Feuer ist besonders intensiv und wirkt als Zünder für den darüberliegenden Müll. Es beschleunigt seine Verbrennung und trägt so zu einer Erhöhung der Verbrennungsleistung der Feuerung bei.

Die Zeichnung dient zur Erläuterung der Erfindung. Sie zeigt einen Walzenrost zur Durchführung des erfindungsgemäßen Verfahrens.
- Figur 1: zeigt schematisch eine Seitenansicht eines Walzenrostes.

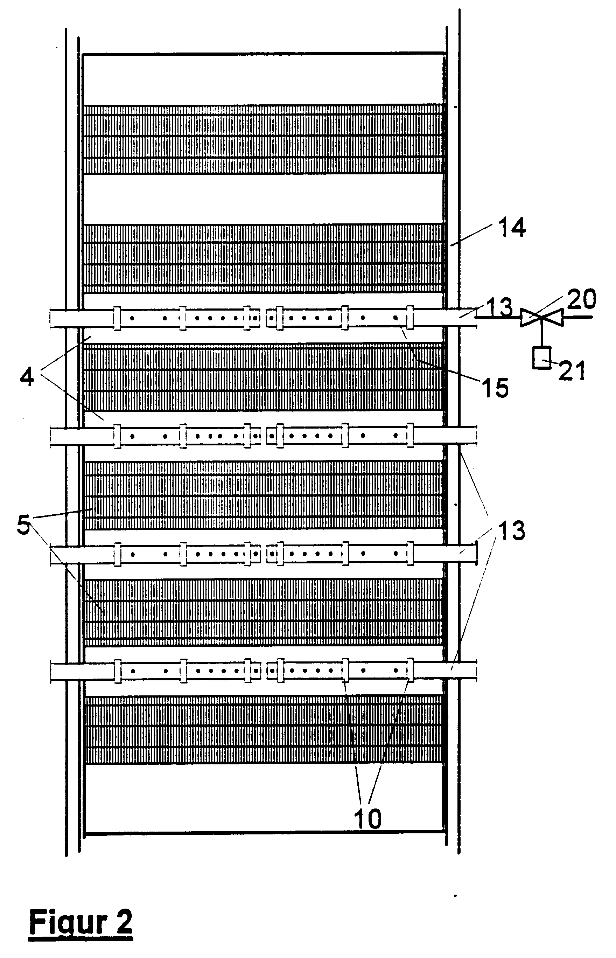

- Figur 2: zeigt eine Draufsicht auf den Walzenrost.
- Figur 3: zeigt in größerem Maßstab eine Einzelheit aus Figur 1.
- Figur 4: zeigt einen Schnitt durch einen Teil eines Blasrohres.

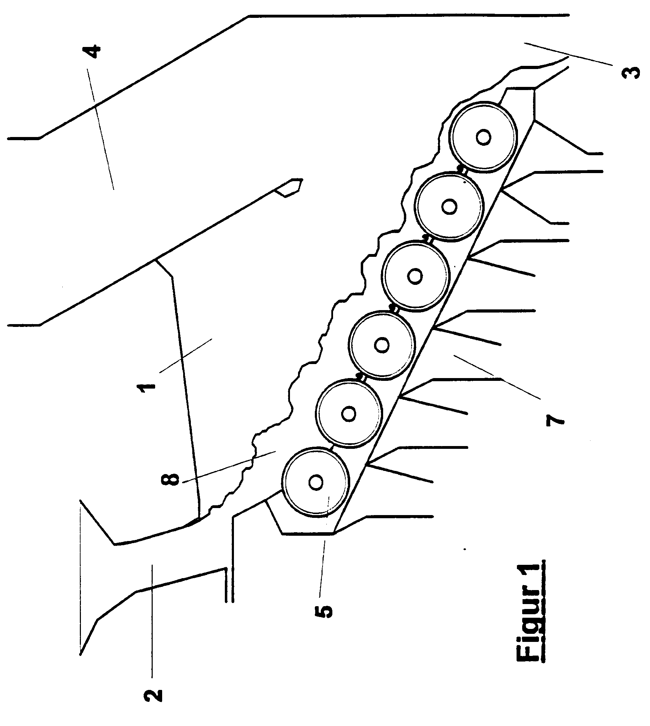

Ein Feuerraum 1 einer Müllverbrennungsanlage mit Beschickungstrichter 2, Ascheausfallschacht 3 und Rauchgaszug 4 ist aus Figur 1 ersichtlich. Den Boden des Feuerraums 1 bildet ein Walzenrost, bestehend aus insgesamt sechs Walzen 5 von etwa 1,5 m Durchmesser. Die Achsen der Walzen 5 liegen waagerecht und parallel zueinander in einer schiefen Ebene, die in Richtung auf den Ausfallschacht 3 etwa 20 bis 30 Grad geneigt ist. Die Mäntel der Walzen 5 bestehen - wie in Figur angedeutet - aus Roststäben 6, von den sich jeder über einen Bogen von 36 Grad erstreckt, so daß insgesamt zehn Roststäbe 6 einen geschlossenen Ring bilden. Die Roststäbe 6 sind etwa 5 cm breit. Zwischen zwei benachbarten Roststäben 6 besteht ein Spalt von etwa 2 bis 3 mm. Jede Walze hat einen Antrieb, mit dem ihre Drehzahl in einem Bereich zwischen etwa 0,6 h⁻¹ und 12 h⁻¹ stufenlos einstellbar ist. Unter dem Walzenrost ist ein im wesentlichen aus Luftkästen 7 bestehendes System zum Zuführen von Primärluft zu den Walzen 5 angeordnet. Die Primärluftströme zu den Walzen 5 sind einzeln steuerbar. Die Primärluftverteilung ist dem unterschiedlichen Sauerstoffbedarf der verschiedenen Zonen des Rostes angepaßt; das Maximum liegt in der Hauptverbrennungszone, d.h. im Bereich der zweiten, dritten und vierten Walze. Auf den Walzen 5 ist eine ungleichmäßige Brennstoffschicht 8 angedeutet. Zwischen je zwei benachbarten Walzen 5 besteht ein im Vergleich zum Walzendurchmesser kleiner Abstand, der durch ein schmales, leistenförmiges Zwischenstück 9 überbrückt ist. Die Breite des Zwischenstücks 9 steht zum Walzendurchmesser in einem Verhältnis zwischen etwa 1:5 und 1:10. Es hat keine Luftdurchlässe.

Auf dem Zwischenstück 9 sind in Abständen mehrere Halteorgane 10 befestigt, bestehend aus je einem Fuß 11 und einem Ring 12.

Die Ringe 12 umschließen mit Spiel Blasrohre 13. Diese haben einen Durchmesser zwischen 20 und 120 mm und sind aus warmfestem Stahl hergestellt. Sie durchdringen die beiden seitlichen Feuerraumwände 14 und reichen etwa bis zur Mitte. Am freien Ende in der Walzenmitte sind die Blasrohre 13 verschlossen. Sie sind außerhalb des Feuerraumes drehbar gelagert und mittels eines nicht dargestellten Antriebs um ihre Achse verschwenkbar. Jedes Blasrohr 13 ist mit mehreren über seine Länge verteilten, senkrecht oder schräg nach oben gerichteten Blasöffnungen 15 versehen. Der Abstand zwischen zwei benachbarten Blasöffnungen beträgt 50 bis 1 000 mm. Die Blasöffnungen haben Durchmesser zwischen 2 mm und 20 mm. Dabei sind Durchmesser und Abstand so aufeinander abgestimmt, daß die Summe der Öffnungsflächen pro m Blasrohrlänge mindestens 0,5 cm² und höchstens 10 cm² beträgt, vorzugsweise höchstens 5 cm². Bei einem bevorzugten Ausführungsbeispiel hat jedes Blasrohr 13 auf seiner Länge von 2,5 m insgesamt zehn in gleichmäßigen Abständen angeordnete Blasöffnungen von 0,6 cm Durchmesser. Die beiden in einem Walzenzwickel angeordneten Blasrohre 13 haben also einen summierten Blasguerschnitt von knapp 6 cm². Die Blasöffnungen können auf der Länge des Blasrohres 13 in unterschiedlichen Abständen angeordnet sein und/oder unterschiedliche Durchmesser haben. Sie können auch bei den verschiedenen Blasrohren eines Walzenrostes unterschiedlich angeordnet sein. Zweckmäßig sind sie so angeordnet und dimensioniert, daß in der Zone des größten Sauerstoffbedarfs, d.h. in der Walzenmitte und insbesondere in den Zwickeln zwischen der zweiten und dritten sowie der dritten und vierten Walze, der Blasguerschnitt pro m Blasrohrlänge am größten ist. In dem Zwickel hinter der ersten Walze und zwischen der fünften und sechsten Walze können die Blasrohre auch fehlen.

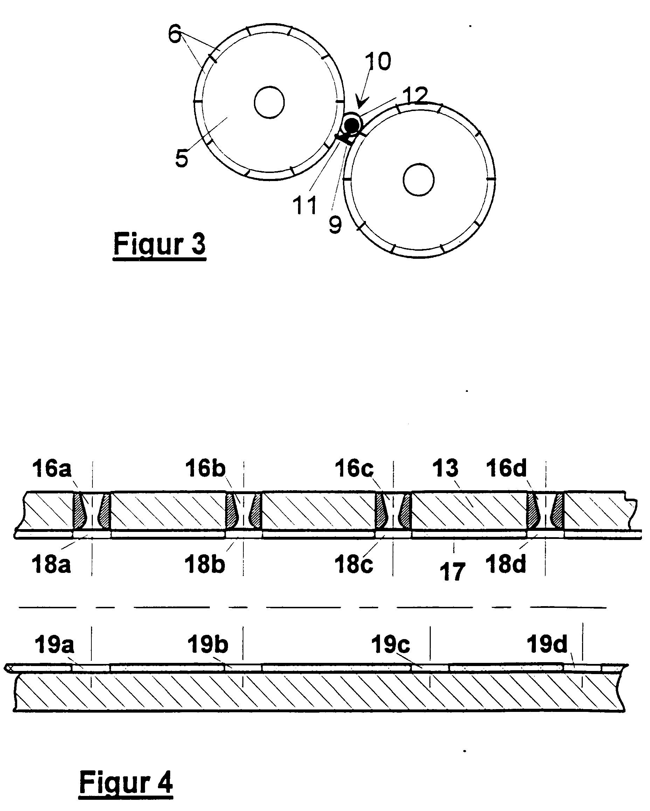

Bei dem in Figur 4 veranschaulichten Ausführungsbeispiel sind die Blasöffnungen als Lavaldüsen 16a bis 16d ausgebildet. In dem Blasrohr 13 sitzt teleskopartig ein Innenrohr 17, welches auf seinem Umfang mehrere Reihen von Öffnungen 18a bis 18d, 19a bis 19d hat. In der dargestellten Position geben die Öffnungen 18a bis 18d die Lavaldüsen 16a bis 16d frei. Verdreht man das Innenrohr 17 jedoch um 180 Grad um seine Achse, so geben zwar die Öffnungen 19a, 19b die Lavaldüsen 16a, 16b frei. Die Öffnungen 19c, 19d sind jedoch Zu den Lavaldüsen 16c, 16d versetzt angeordnet, so daß die Lavaldüsen 16c, 16d in dieser Position gesperrt sind. Durch axiale Verschiebung des Innenrohres 17 in dem Blasrohr 13 lassen sich die Lavaldüsen 16a, 16b sperren und die Lavaldüsen 16c, 16d öffnen.

Die Blasrohre 13 sind über Ventile 20, die durch eine Zeitschaltvorrichtung 21 zu betätigen sind, an ein nicht dargestelltes Zusatzluftsystem angeschlossen. Der Druck im Zusatzluftsystem liegt 0,05 bis 1 MPa über dem Druck der Feuerraumatmosphäre. Es steht mit einem Vorratsbehälter in Verbindung, der reinen Sauerstoff oder mit Sauerstoff angereicherte Luft enthält.

Im Betrieb wird über die Blasrohre 13 Zusatzluft, vorzugsweise vorgewärmt und bis zu 50 % mit Sauerstoff angereichert, eingeblasen. Da die Blasrohre 13 in den Zwickeln von Müll umschlossen sind, dringen die Blasstrahlen mit Sicherheit in die Müllschicht ein.

Es sind verschiedene Betriebsweisen möglich. Wenn z.B. mit einem Überdruck von etwa 0,05 bis 0,2 MPa gearbeitet wird, bei dem die Geschwindigkeit der Zusatzluftströme noch wesentlich unter der Schallgeschwindigkeit liegt, wird die Zusatzluft mit Vorteil kontinuierlich zugeführt. Die Blasrohre 13 werden hin und her geschwenkt. Durch die periodische Anderung der Blasrichtung wird ein guter Auflockerungseffekt erzielt.

Der Überdruck im Zusatzluftsystem kann aber auch wesentlich höher gewählt werden, etwa zwischen 0,4 und 1 MPa, vorzugsweise so hoch, daß die Zusatzluftströme Überschallgeschwindigkeit erreichen, vorausgesetzt natürlich, daß die Blasrohre 13 mit Lavaldüsen 16 bestückt sind. In diesem Falle empfiehlt es sich, die Zusatzluft mit Intervallen stoßweise einzublasen. Die Dauer eines Luftstoßes liegt z.B. zwischen 1 s und 100 s, vorzugsweise zwischen 10 s und 100 s, die Dauer eines Intervalls zwischen 1 s und 300 s, vorzugsweise zwischen 30 s und 300 s.

Durch den zusätzlichen Schüreffekt werden Zusammenballungen aufgelöst. Dadurch werden die Oberflächen der Partikel besser der Primärluft ausgesetzt. Die Primärluft wird besser genutzt. Das läßt sich mit relativ geringen Mengen Zusatzluft erreichen. Das Mengenverhältnis zwischen Zusatzluft und Primärluft liegt durchweg zwischen 1:10 bis 1:100, vorzugsweise zwischen 1:10 und 1:30. Wenn das Mengenverhältnis z.B. 1:20 beträgt und die Zusatzluft durch Beimischung von Sauerstoff auf 30 % angereichert ist, liegt der Sauerstoffbedarf unter 0,6 % der Primärluftmenge.

Ein zusätzlicher Vorteil der Erfindung besteht auch darin, daß bei Walzenrosten der Aschedurchfall im Zwickelbereich verkleinert wird.

## Patentansprüche

1. Verfahren zum Verbrennen von Müll auf einem Walzenrost, wobei eine aus Müll gebildete Schicht auf dem Walzenrost in dessen Längsrichtung gefördert und dabei verbrannt wird, wobei der Schicht durch die Rostwalzen des Walzenrostes hindurch von unten Primärluft zugeführt wird und wobei unabhängig von der Primärluft im Bereich schmaler, sich in Querrichtung zwischen den Rostwalzen erstreckender Zonen der Schicht Zusatzluft zugeführt wird, dadurch gekennzeichnet, daß die Zusatzluft mit Sauerstoff angereichert ist und über von dem Müll umschlossene Blasrohre in die Schicht eingeblasen wird.

2. Verfahren nach Anspruch 1, dadurch gekennzeichnet, daß Zusatzluft eingeblasen wird, die auf 25 bis 50 % Sauerstoff angereichert ist.

3. Verfahren nach Anspruch 1 oder 2, dadurch gekennzeichnet, daß die Zusatzluft stoßweise mit Unterbrechungen zugeführt wird.

4. Verfahren nach Anspruch 3, dadurch gekennzeichnet, daß die Zusatzluft mit einem Überdruck von 0,4 bis 1 Mpa relativ zur Feuerraumatmosphäre zugeführt wird.

5. Verfahren nach Anspruch 1 oder 2, dadurch gekennzeichnet, daß die Zusatzluft kontinuierlich zugeführt wird.

6. Verfahren nach Anspruch 5, dadurch gekennzeichnet, daß die Blasrichtung periodisch geändert wird.

7. Verfahren nach Anspruch 5 oder 6, dadurch gekennzeichnet, daß die Zusatzluft mit einem Überdruck von 0,05 bis 0,2 MPa relativ zur Feuerraumatmosphäre zugeführt wird.

8. Verfahren nach einem der Ansprüche 1 bis 7, dadurch gekennzeichnet, daß die Menge der Zusatzluft zur Menge der Primärluft in einem Verhältnis 1:10 bis 1:100 steht, vorzugsweise in einem Verhältnis 1:10 bis 1:30.

9. Walzenrost zur Verbrennung von Müll, mit mehreren Walzen, deren Achsen waagerecht und parallel zueinander in einer schiefen Ebene angeordnet sind und deren Mantelflächen mit Luftspalten zum Zuführen von Primärluft versehen sind, mit Zwischenstücken, die in den Zwickeln benachbarter Walzen angeordnet sind und den Zwischenraum zwischen den beiden Walzen überbrücken und mit einem System zum Zuführen von Primärluft in das Innere der Walzen und einem separaten System zum Zuführen von Zusatzluft in die Zwickel, dadurch gekennzeichnet, daß zumindest in der Hauptverbrennungszone in den Zwickeln zu den Walzenachsen parallele Blasrohre (13) liegen, welche an das Zusatzluftsystem angeschlossen und mit Blasöffnungen (15) versehen sind, und daß das Zusatzluftsystem mit Sauerstoff angereicherte Luft enthält.

10. Walzenrost nach Anspruch 9, dadurch gekennzeichnet, daß die Blasrohre (13) durch Halteorgane (10) an den Zwischenstücken (9) befestigt sind.

11. Walzenrost nach Anspruch 9 oder 10, dadurch gekennzeichnet, daß die Blasrohre (13) um ihre Achse drehbar sind.

12. Walzenrost nach einem der Ansprüche 9 bis 11, dadurch gekennzeichnet, daß in dem Zwickel zwei Blasrohre (13) angeordnet sind, von denen jedes eine Feuerraumwand (14) durchdringt und bis zur Mitte reicht.

13. Walzenrost nach einem der Ansprüche 9 bis 12, dadurch gekennzeichnet, daß die Blasöffnungen (15) als Lavaldüsen (16) ausgebildet sind.

14. Walzenrost nach einem der Ansprüche 9 bis 13, dadurch gekennzeichnet, daß die Blasöffnungen (15) einzeln oder gruppenweise verschließbar sind.

15. Walzenrost nach einem der Ansprüche 9 bis 14, dadurch gekennzeichnet, daß zwischen Blasrohr (13) und Zusatzluftsystem ein Ventil (20) angeordnet ist, welches durch eine Zeitschaltvorrichtung (21) gesteuert ist.

## Claims

1. Method for the combustion of refuse on a roller grate, wherein a layer formed of refuse is conveyed on the roller grate in its longitudinal direction and combusted in that case, whilst primary air is fed from below to the layer through the grate rollers of the roller grate and whilst, independently of the primary air, additional air is fed to zones of the layer which extend in transverse direction between the grate rollers, characterised in that the additional air is enriched with oxygen and blown into the layer by way of blow pipes surrounded by the refuse.

2. Method according to claim 1, characterised in that additional air, which is enriched by 25 to 50% of oxygen, is blown in.

3. Method according to claim 1 or 2, characterised in that the additional air is supplied intermittently with interruptions.

4. Method according to claim 3, characterised in that the additional air is supplied at an excess pressure of 0.4 to 1 megapascals relative to the combustion chamber atmosphere.

5. Method according to claim 1 or 2, characterised in that the additional air is supplied continuously.

6. Method according to claim 5, characterised in that the direction of blowing is varied periodically.

7. Method according to claim 5 or 6, characterised in that the additional air is supplied to an excess pressure of 0.05 to 0.2 megapascals relative to the combustion chamber atmosphere.

8. Method according to one of the claims 1 to 7, characterised in that the quantity of the additional air is in a ratio of 1:10 to 1:100, preferably in a ratio of 1:10 to 1:30, to the quantity of the primary air.

9. Roller grate for the combustion of refuse, with several rollers, the axes of which are arranged horizontally and parallel to each other in an inclined plane and the envelope surfaces of which are provided with air gaps for the supply of primary air, with intermediate members which are arranged in the pendentives of neighbouring rollers and bridge over the gap between the two rollers and with a system for the feeding of primary air into the interior of the rollers and a separate system for the feeding of additional air into the pendentives, characterised in that blow pipes (13), which are parallel to the roller axes, lie in the pendentives at least in the main combustion zone, are connected to the additional air system and provided with blow openings (15) and that the additional air system contains air enriched with oxygen.

10. Roller grate according to claim 9, characterised in that the blow pipes (13) are fastened at the intermediate members (9) by retaining elements (10).

11. Roller grate according to claim 9 or 10, characterised in that the blow pipes (13) are rotatable about their axes.

12. Roller grate according to one of claims 9 to 11, characterised in that two blow pipes (13) are arranged in the pendentive and each penetrate a combustion chamber wall (14) and reach to the centre.

13. Roller grate according to one of claims 9 to 12, characterised in that the blow openings (15) are formed as Laval nozzles (16).

14. Roller grate according to one of claims 9 to 13, characterised in that the blow openings (15) are closable individually or in groups.

15. Roller grate according to one of claims 9 to 14, characterised in that a valve (20), which is controlled by a time switch device (21), is arranged between blow pipe (13) and additional air system.

## Revendications

1. L'invention concerne un procédé permettant d'incinérer des déchets ménagers sur une grille à rouleaux. Selon ce procédé, une couche de déchets ménagers est acheminée sur une grille à rouleaux, dans son sens longitudinal, les déchets étant incinérés à cette occasion. De l'air primaire est acheminé depuis le bas, jusqu'à la couche de déchets, à travers les rouleaux de la grille à rouleaux. De l'air supplémentaire est acheminé, indépendamment de l'air primaire, dans la région de zones plus étroites de la couche de déchets, qui s'étendant dans le sens transversal entre les rouleaux de la grille. Ce procédé se caractérise en ce que l'air supplémentaire est enrichi en oxygène et est injecté dans la couche de déchets par l'intermédiaire de tuyaux d'injection d'air.

2. Procédé selon la revendication 1, se caractérisant en ce qu'il est injecté de l'air supplémentaire enrichi en oxygène, dans une proportion de l'ordre de 25 à 50%.

3. Procédé selon la revendication 1 ou 2, se caractérisant en ce que de l'air supplémentaire est acheminé par intermittence, de manière discontinue.

4. Procédé selon la revendication 3, se caractérisant en ce que l'air supplémentaire est acheminé avec une surpression de 0,4 à 1 Mpa, par rapport à l'atmosphère régnant dans le foyer.

5. Procédé selon la revendication 1 ou 2, se caractérisant en ce que l'air supplémentaire est acheminé en continu.

6. Procédé selon la revendication 5, se caractérisant en ce que le sens d'injection de l'air est modifié périodiquement.

7. Procédé selon la revendication 5 ou 6, se caractérisant en ce que de l'air supplémentaire est acheminé avec une surpression de 0,05 à 0,2 Mpa par rapport à l'atmosphère régnant dans le foyer.

8. Procédé selon les revendications 1 à 7, se caractérisant en ce que le rapport du volume d'air supplémentaire au volume d'air primaire est de 1:10 à 1:100, de préférence de 1:10 à 1:30.

9. L'invention concerne une grille à rouleaux utilisée pour incinérer des déchets ménagers, qui comprend plusieurs rouleaux dont les arbres sont disposés horizontalement et parallèlement les uns aux autres, dans un plan incliné, et dont les surfaces extérieures sont pourvues de fentes d'aération pour acheminer l'air primaire. Cette grille comprend également des pièces intermédiaires placées dans les chanteaux de rouleaux adjacents et chevauchent l'espace intermédiaire entre les deux rouleaux, ainsi qu'un système pour acheminer de l'air primaire à l'intérieur des rouleaux et un système séparé pour acheminer de l'air supplémentaire dans les chanteaux. Cette grille à rouleaux se caractérise en ce qu'au moins dans la zone principale d'incinération, il est prévu dans les chanteaux, des tuyaux d'injection d'air, parallèles aux axes des rouleaux. Ces tuyaux d'injection d'air sont raccordés au système d'air supplémentaire et sont munis d'orifices d'injection (15). Cette grille à rouleaux se caractérise en ce que le système d'air supplémentaire contient de l'air enrichi en oxygène.

10. Grille à rouleaux selon la revendication 9, se caractérisant en ce que les tuyaux d'injection d'air (13) sont fixés sur les pièces intermédiaires (9) par des éléments de retenue (10).

11. Grille à rouleaux selon la revendication 9 ou 10, se caractérisant en ce que les tuyaux d'injection d'air (13) peuvent tourner autour de leur axe.

12. Grille à rouleaux selon une des revendications 9 à 11, se caractérisant en se que deux tuyaux d'injection d'air (13) sont placés dans le chanteau. Chaque tuyau d'injection d'air traverse une paroi du foyer (14) et parvient jusque dans le milieu.

13. Grille à rouleaux selon une des revendications 9 à 12, se caractérisant en ce que les orifices d'injection (15) se présentent sous forme de Laval-injecteurs (16).

14. Grille à rouleaux selon une des revendications 9 à 13, se caractérisant en ce que les orifices d'injection (15) peuvent être fermés individuellement ou par groupes.

15. Grille à rouleaux selon une des revendications 9 à 14, se caractérisant en ce qu'il est prévu entre le tuyau d'injection d'air (13) et le système d'air supplémentaire, un clapet (20) piloté par un dispositif temporisé (21).
